# FASCICULE DE BREVET EUROPEEN

(11) **EP 0 571 529 B1**
(45) Date de publication et mention de la délivrance du brevet: **17.11.1994**
(21) Numéro de dépôt: 92906815.3
(22) Date de dépôt: 14.02.1992
(51) Int. Cl.: B60J 3/04, B60Q 1/14

(54) **SYSTEME ANTI-EBLOUISSEMENT POUR VEHICULES**
Blendschutzeinrichtung für Fahrzeug
ANTI-DAZZLE SYSTEM FOR VEHICLES

(30) Priorité: 19.02.1991 FR 9101929
(43) Date de publication de la demande: 01.12.1993
(73) Titulaire: THOMSON-CSF, 75008 Paris (FR)
(72) Inventeur: AIGRAIN, Pierre, F-92045 Paris-La Défense Cédex 67 (FR)
(74) Mandataire: Guérin, Michel
(86) Numéro de dépôt international: FR9200148
(87) Numéro de publication internationale: WO9214625

(56) Documents cités:
- DE-A- 3 641 315
- US-A- 4 286 308
- US-H- 686

## Description

L'invention est relative à un système anti-éblouissement pour véhicules et à des équipements utilisables dans un tel système.

Le problème de l'éblouissement, la nuit, des conducteurs de véhicules automobiles par les phares des autres véhicules roulent en sens inverse n'a jusqu'à présent pas été résolu de façon satisfaisante. Pourtant cet éblouissement est particulièrement gênant puisqu'il provoque de la fatigue et constitue, même si les feux de croisement de tous les véhicules sont réglés correctement, un facteur de risque d'accident.

Pour résoudre ce problème on a déjà proposé que les phares des véhicules émettent une lumière polarisée circulairement et que les pare-brises soient pourvus d'un écran polarisant atténuant la lumière polarisée émise par les phares des véhicules arrivant en sens inverse sans atténuer, pour le conducteur, la luminosité de la zone éclairée par les phares de son propre véhicule. Etant donné que l'écran n'atténue pas la lumière non-polarisée, pour qu'un tel système présente de l'intérêt il faudrait que tous les véhicules en soient équipés. Pour aboutir à ce résultat il faudrait en un temps réduit imposer l'équipement de tous les véhicules. Une telle mesure est difficilement envisageable.

Le document antérieur US-A-4,286,308 montre un système anti-éblouissement pour véhicules, comprenant un écran disposé devant le conducteur et dont le coefficient de transmission est variable, ainsi que des moyens pour que les phares émettent des impulsions périodiques de lumière et pour faire varier le coefficient de transmission de l'écran. Le système anti-éblouissement connu montre aussi un détecteur de lumière. Quand le niveau détecté de l'éblouissement est en dessous d'un seuil prédéterminé, l'écran est dans l'état transparent. Quand un véhicule approche et que le niveau détecté de l'éblouissement dépasse ce seuil, le dispositif accroit la durée pendant laquelle l'écran est opaque.

L'invention fournit un système anti-éblouissement selon la revendication 1 qui n'est pas tributaire de l'équipement des autres véhicules.

Dans le système selon l'invention le (ou les) phare(s) du véhicule émet(tent) des impulsions périodiques de lumière dont la durée est de préférence faible par rapport à la période et devant le conducteur est disposé un écran à coefficient de transmission variable de façon telle qu'il soit transparent pendant la durée des impulsions lumineuses et que le coefficient de transmission soit sensiblement moins important entre ces impulsions.

Ainsi la luminosité de la zone éclairée n'est pratiquement pas diminuée pour le conducteur car cette zone n'est éclairée que pendant les périodes de transparence maximum de l'écran; autrement dit le conducteur bénéficie pleinement de l'éclairage fourni par son (ou ses) phare(s). Par contre les phares des autres véhicules, ou les autres sources émettant de la lumière visible de façon continue, sont vus de façon atténuée puisque la plupart du temps l'écran présente un coefficient de transmission relativement faible et que l'oeil intègre ce coefficient dans le temps. Cette remarque est valable non seulement pour les sources émettant de la lumière en continu mais aussi pour les autres sources émettant des impulsions lumineuses, à condition que ces impulsions ne coïncident pas avec la période de transparence de l'écran.

Bien que la probabilité de coïncidence des périodes de transparence maximum de l'écran avec les périodes d'émission d'impulsions lumineuses par les phares de véhicules venant en sens inverse soit faible il n'en demeure pas moins que cette probabilité n'est pas nulle. Et si cette coïncidence se produit alors le système perd momentanément son efficacité d'anti-éblouissement. C'est pourquoi, selon l'invention, on prévoit, dans le véhicule, par exemple sur le pare-brise, un détecteur sensible aux impulsions lumineuses produites par les phares des véhicules venant en sens inverse et le signal fourni par ce détecteur est utilisé par un circuit de commande pour, si nécessaire, déphaser, par rapport aux impulsions détectées, les impulsions lumineuses et les impulsions de commande de transparence de l'écran.

De préférence la fréquence de répétition des impulsions lumineuses est telle que le caractère impulsionnel ou périodique de l'émission lumineuse soit quasiment imperceptible. Cette fréquence est par exemple d'au moins 200 impulsions par seconde, ce qui évite, outre la perception directe du caractère périodique, les effets stroboscopiques.

La durée de chaque impulsion est, dans un exemple, inférieure ou égale à 1/50è de la période de répétition. Si la fréquence est de 200 impulsions par seconde la durée de l'impulsion sera alors d'au maximum 100 microsecondes.

De préférence on prévoit un moyen, par exemple commandé du tableau de bord, pour rendre l'écran constamment transparent, par exemple dans les zones éclairées ou sur les routes désertes, ou encore de jour.

En variante, ou de façon complémentaire, l'écran est escamotable ou amovible de façon à pouvoir être éloigné des yeux du conducteur de jour ou en zone suffisamment éclairée. A cet effet l'écran peut être disposé de façon analogue à un pare-soleil.

Les lampes utilisées dans le véhicule seront par exemple du type "flash".

Dans une réalisation l'écran est du type à cristal liquide, notamment ferro-électrique. Pour constituer l'écran on peut par exemple utiliser le produit vendu par la Société MERCK sous la référence ZLI 4237, cet écran étant disposé entre deux polariseurs.

Pour modifier le coefficient de transmission de cet écran à cristal liquide ferro-électrique il suffit d'appliquer entre les deux faces de l'écran une tension de commande relativement faible, de l'ordre de quelques volts. Le temps de commutation est inférieur à 40 microsecondes. La tension appliquée modifie la polarisation de la lumière transmise et donc la transparence de l'ensemble formé par l'écran et les deux polariseurs.

Pour commander la commutation il suffit de prévoir deux électrodes, une sur chaque face.

L'écran a par exemple la forme d'un rectangle de 30 cm sur 15 cm.

D'autres caractéristiques et avantages de l'invention apparaîtront avec la description de l'un de ses modes de réalisation, celle-ci étant effectuée en se référant aux dessins ci-annexés sur lesquels :
- la figure 1 est un schéma d'un système selon l'invention, et
- les figures 2a et 2b sont des diagrammes illustrant le fonctionnement du système de la figure 1.

L'exemple qu'on va décrire se rapporte à un véhicule automobile avec deux phares 10 et 11. Chacun des phares comporte un réflecteur 12 et au moins une lampe à éclair 13, 13'.

Chaque lampe à éclair est alimentée par le secondaire 14, 14' d'un transformateur 15, 15' élévateur de tension. Les primaires 16, 16' des transformateurs 15, 15' sont connectés à la sortie d'un amplificateur de puissance 17 dont l'entrée 17₁ reçoit des impulsions fournies par un circuit générateur 18.

Devant les yeux du conducteur est disposé un écran 20 en matériau à cristal liquide ferro-électrique avec une face avant 21 recouverte d'une électrode transparente reliée à la masse et une face arrière 22 couverte d'une autre électrode transparente reliée à la sortie du circuit générateur d'impulsions 18.

Un détecteur 30 est disposé à proximité de l'écran et est relié au circuit 18 générateur d'impulsions.

Un polariseur 23 est disposé devant la face 21 de l'écran 20 et un polariseur 24 est disposé au voisinage de la face 22 de cet écran 20.

Pour que les phares des véhicules venant en sens inverse soient visibles du conducteur, les polariseurs 23 et 24 doivent être légèrement décalés de l'extinction parfaite, par exemple d un angle de 1° environ. On peut aussi utiliser des polariseurs volontairement légèrement imparfaits.

En effet, le cristal liquide fait tourner le plan de polarisation de la lumière. Si les polariseurs 23 et 24 ne sont pas décalés, le cristal liquide fait tourner le plan de polarisation de 90° ce qui rend l'écran (constitué de l'écran proprement dit 20 et des polariseurs 23 et 24) complètement opaque. Ainsi avec le léger décalage, ou avec des polariseurs légèrement imparfaits, même a l'état non transparent, l'ensemble - écran laisse passer de la lumière de façon à permettre la vision des phares des véhicules venant en sens inverse.

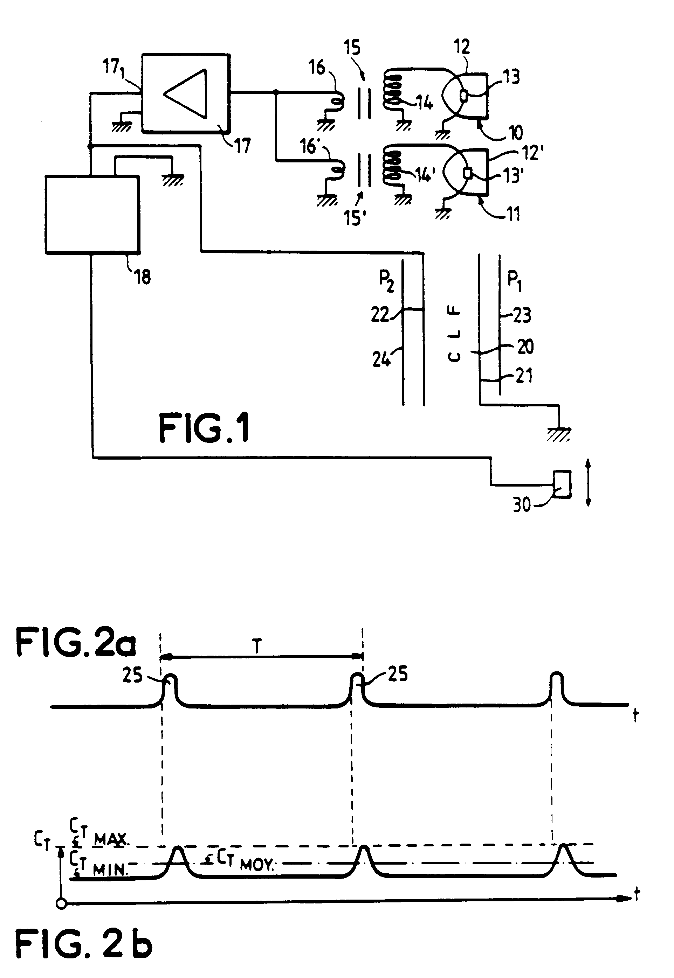

Les impulsions produites par le générateur 18 sont représentées sur la figure 2a. Dans cet exemple chaque impulsion 25 a une durée de 100 microsecondes et la période T séparant deux impulsions 25 est de 5 millisecondes (200 impulsions par seconde). Ainsi la durée de l'impulsion 25 est d'un cinquantième de la période T.

On a représenté sur la figure 2b le coefficient de transmission de l'écran 20 commandé par les impulsions 25. L'écran 20 présente une coefficient de transmission important CT_{MAX} pendant la durée d'application des impulsions 25 et un coefficient de transmission faible CT_{MIN} entre les impulsions 25.

La puissance des phares est pleinement utilisée pour le conducteur puisque l'écran 20 est transparent pendant les périodes d'émissions lumineuses. Par contre il ne verra les sources lumineuses continues des véhicules arrivant en sens inverse qu'avec un coefficient de transmission moyen CT_{MOY} de l'écran qui est très légèrement supérieur à CT_{MIN}.

Le générateur 18 comporte un déphaseur pour décaler temporellement les impulsions 25 quand l'information fournie par le détecteur 30 montre que le véhicule venant en sens inverse émet des impulsions lumineuses et que ces impulsions coïncident au moins partiellement dans le temps avec les impulsions du générateur 18. Ce déphasage des impulsions 25 ne pose pas de problème en raison de leur faible durée par rapport à la période T.

Le système anti-éblouissement est utilisable principalement pour équiper les véhicules automobiles de tous types : voitures particulières, camions, cars, etc...

Il est envisageable d'équiper les deux roues avec un écran, par exemple sur la visière du casque.

## Revendications

1. Système anti-éblouissement pour véhicule, comprenant un écran (20) disposé devant le conducteur ainsi que des moyens pour que le (s) phare(s) (10, 11) du véhicule émette(nt) des impulsions périodiques (25) de lumière de durée faible par rapport à leur période, caractérisé en ce qu'il comprend des moyens pour faire varier le coefficient de transmission de l'écran de façon que ce dernier soit transparent pendant la durée des impulsions lumineuses et ait un coefficient de transmission sensiblement moins important, mais non nul, entre ces impulsions.

2. Système selon la revendication 1, caractérisé en ce que le rapport entre la durée de chaque impulsion (25) et la période est un cinquantième ou moins.

3. Système selon la revendication 1 ou 2, caractérisé en ce que la fréquence des impulsions est d'au moins 200 impulsions par seconde.

4. Système selon la revendication 1 à 3, caractérisé en ce que l'écran (20) présente sur chacune de ses faces (21, 22) des électrodes transparentes.

5. Système selon l'une des revendications précédentes, caractérisé en ce que le matériau de l'écran (20) est un cristal liquide de préférence ferro-électrique.

6. Système selon la revendication 5, caractérisé en ce qu'à l'écran en cristal liquide sont associés deux polariseurs (23, 24) réglés pour que sans tension appliquée à l'écran (20), l'ensemble de l'écran et des deux polariseurs présente un coefficient de transmission non nul.

7. Système selon l'une quelconque des revendications précédentes, caractérisé en ce que les moyens d'éclairage du véhicule sont équipés de lampes à éclair.

8. Système selon l'une quelconque des revendications précédentes, caractérisé en ce qu'il comprend un moyen pour rendre l'écran constamment transparent.

9. Système selon l'une quelconque des revendications précédentes, caractérisé en ce que l'écran (20) est escamotable.

10. Système selon l'une quelconque des revendications précédentes, caractérisé en ce que l'écran (20) a la forme d'un rectangle.

11. Système selon l'une quelconque des revendications précédentes, caractérisé en ce qu'il comporte un détecteur (30) sensible aux sources émettant de la lumière de façon périodique et un moyen sensible au signal fourni par ce détecteur (30) pour déterminer si les périodes d'émission des sources détectées coïncident avec la lumière émise et, en cas de coïncidence, pour décaler les impulsions (25) émises par rapport auxdites périodes d'émission.

## Claims

1. Anti-dazzle system for a vehicle, comprising a screen (20) which is arranged in front of the driver as well as means so that the headlamp(s) (10, 11) of the vehicle send(s) out periodic light pulses (25) of a short duration with respect to their period characterised in that it comprises means for making the transmission coefficient of the screen vary so that the latter is transparent during the duration of the light pulses and has a substantially lower, but non-zero, transmission coefficient between these pulses.

2. System according to Claim 1, characterised in that the ratio between the duration of each pulse (25) and the period is a fiftieth or less.

3. System according to Claim 1 or 2, characterised in that the frequency of the pulses is of at least 200 pulses per second.

4. System according to Claim 1 to 3, characterised in that the screen (20) has transparent electrodes on each of its faces (21, 22).

5. System according to one of the preceding claims, characterised in that the material of the screen (20) is a preferably ferro-electric liquid crystal.

6. System according to Claim 5, characterised in that, with the liquid crystal screen, there are associated two polarisers (23, 24) adjusted so that, without voltage applied to the screen (20), the assembly of the screen and of the two polarisers exhibits a non-zero transmission coefficient.

7. System according to any one of the preceding claims, characterised in that the illumination means of the vehicle are equipped with flashlamps.

8. System according to any one of the preceding claims, characterised in that it comprises a means for making the screen permanently transparent.

9. System according to any one of the preceding claims, characterised in that the screen (20) is retractable.

10. System according to any one of the preceding claims, characterised in that the screen (20) has the shape of a rectangle.

11. System according to any one of the preceding claims, characterised in that it includes a detector (30) which is sensitive to the sources emitting light in a periodic fashion and a means sensitive to the signal supplied by this detector (30) for determining whether the emission periods of the detected sources coincide with the light emitted and, in the event of coincidence, to offset the pulses (25) emitted with respect to the said emission periods.

## Patentansprüche

1. Fahrzeug-Blendschutzeinrichtung mit einem vor dem Fahrer angeordneten Schirm (20) sowie Mitteln, um zu veranlassen, daß der (die) Scheinwerfer (10, 11) des Fahrzeuges periodische Lichtimpulse (25) mit einer gegenüber ihrer Periode kurzen Dauer aussendet (aussenden), gekennzeichnet durch Mittel zum Ändern des Durchlässigkeitskoeffizienten dem Schirmes in der Weise, daß dieser während der Dauer der Lichtimpulse durchlässig ist und zwischen diesen Impulsen einen wesentlich kleineren, jedoch von null verschiedenen Durchlässigkeitskoeffizienten hat.

2. Einrichtung nah Anspruch 1, dadurch gekennzeichnet, daß das Verhältnis zwischen der Dauer jedes Impulses (25) und der Periode 1/50tel oder weniger beträgt.

3. Einrichtung nach Anspruch 1 oder 2, dadurch gekennzeichnet, daß die Frequenz der Impulse wenigstens 200 Impulse pro Sekunde beträgt.

4. System nach den Ansprüchen 1-3, dadurch gekennzeichnet, daß der Schirm (20) auf jedes seiner Flächen (21, 22) transparente Elektroden aufweist.

5. Einrichtung nach einem der vorgehenden Ansprüche, dadurch gekennzeichnet, daß das Material des Schirmes (20) ein vorzugsweise ferroelektrischer Flüssigkristall ist.

6. Einrichtung nach Anspruch 5, dadurch gekennzeichnet, daß dem Flüssigkristallschirm zwei Polarisatoren (23, 24) zugeordnet sind, die so eingestellt sind, daß ohne an den Schirm (20) angelegte Spannung die Baueinheit aus des Schirm und den zwei Polarisatoren einen von null verschieden Durchlässigkeitskoeffizienten hat.

7. Einrichtung nach eines der vorhergehenden Ansprüche, dadurch gekennzeichnet, daß die Beleuchtungsmittel des Fahrzeuges mit Blitzlampen ausgestattet sind.

8. Einrichtung nach einem der vorhergehenden Ansprüche, dadurch gekennzeichnet, daß sie ein Mittel enthält, um den Schirm ständig transparent zu machen.

9. Einrichtung nach einem der vorhergehenden Ansprüche, dadurch gekennzeichnet, daß der Schirm (20) umklappbar ist.

10. Einrichtung nach einem der vorhergehenden Ansprüche, dadurch gekennzeichnet, daß der Schirm (20) die Form eines Rechteckes hat.

11. Einrichtung nach einem der vorhergehenden Ansprüche, gekennzeichnet durch einen Detektor (30), der für Quellen empfindlich ist, die Licht periodisch aussenden, und ein für das von diesem Detektor (30) empfindliches Mittel zum Bestimmen, ob die Sendeperioden der festgestellten Quellen mit dem ausgesendeten Licht übereinstimmen und um im Falle der Übereinstimmung die ausgesendeten Impulse (25) bezüglich der Sendeperioden zu verschieben.
